# EUROPÄISCHE PATENTANMELDUNG

(11) **EP 1 219 923 A2**
(43) Veröffentlichungstag der Anmeldung: **03.07.2002**
(21) Anmeldenummer: 01130062.1
(22) Anmeldetag: 18.12.2001
(51) Int. Cl.: G01B 13/00

(54) **Messvorrichtung**

(30) Priorität: 27.12.2000 DE 20021994 U; 23.03.2001 DE 20105098 U; 10.10.2001 DE 20116588 U
(71) Anmelder: ASF Thomas Industries GmbH, 87700 Memmingen (DE)
(72) Erfinder: Garber, Roland, D-87700 Memmingen (DE); Moser, Richard, D-88459 Tannheim (DE); Colditz, Steffen, D-87496 Untrasried (DE)
(74) Vertreter: Pfister, Stefan Helmut Ulrich

(57) **Zusammenfassung**

Die Erfindung betrifft eine Meßvorrichtung für das Erfassen zumindestens eines Maßes oder einer Dimension einer mit einem Medium gefüllten Blase sowie ein System zum Einstellen einer Oberflächenkontur und ein System zum Erfassen der Flächenbelastung, insbesondere bei Sitzen.

Die Meßvorrichtung weist einen Taster auf, der an der Haut der Blase anliegt und mit einem Sensor zusammenwirkt, der die jeweilige Stellung des Tasters bezüglich eines Referenzpunktes ermittelt und den entsprechenden Wert aufgibt.

## Beschreibung

Die Erfindung betrifft eine Meßvorrichtung für das Erfassen zumindest eines Maßes einer mit einem Medium gefüllten Blase, ein System zum Einstellen einer Oberflächenkontur, bestehend aus einer Anordnung von füllbaren Blasen und einem Sitz mit einem System aus einer Anzahl von Blasen zur Veränderung der Kontur einer Sitzoberfläche.

Um die Ausdehnung einer mit einem Medium (z.B. Gas) gefüllten Blase zu bestimmen, wird in der Regel der Druck des in der Blase befindlichen Gases (oder allgemein des Mediums) gemessen.

Da das Volumen jedoch sehr stark temperatur- und/oder lastabhängig ist, lassen sich die Außenabmessungen der Blase nie exakt ermitteln beziehungsweise einstellen. Auch setzen die bekannten Anordnungen voraus, daß die Blasen möglichst dicht sind.

Es ist bekannt, bei Autositzen zur Erhöhung des Komforts die Sitzoberfläche (Sitzfläche und/oder Rückenlehne) mit Luft- oder Flüssigkeitskissen zu versehen, wobei durch entsprechendes Füllen dieser Kissen (also Blasen) die Oberflächenkontur des Sitzes verändert werden kann. Aufgrund der sehr hohen Temperaturschwankungen in einem Fahrzeug verändert sich das Volumen dieser Luftkissen dermaßen, daß es notwendig ist, die Luftkissen jeweils neu einzustellen. Dies kann manuell geschehen, durch Öffnen von Ventilen und gegebenenfalls dem Einschalten einer Pumpe oder das Nachstellen erfolgt elektronisch mit Hilfe einer Steuerung, die den vorbestimmten Druck bzw. das notwendige Volumen innerhalb einer Blase wieder einstellt. Nachteilig hierbei ist, daß die Oberflächenkontur, die ja einer meßbaren Strecke entspricht, mittelbar über den Druck ermittelt wird, und dadurch zusätzliche Störgrößen das Ergebnis verfälschen können.

Aus dem Stand der Technik ist die europäische Patentanmeldung 289 165 bekannt. In dieser Schrift werden zwei, von Außen an die Blase greifende Gabeltaster vorgeschlagen, die je gelenkig gelagert sind. Diese setzen die an der Blase abgegriffene Dimension um auf einen Schieber, der auf einen feststehenden Schalter wirkt. Bei einem zu geringen Blasenvolumen wird der Schalter betätigt. Nachteilig bei dieser Ausgestaltung ist die verhältnismäßig ungenaue Wegaufnahme, aufgrund der notwendigen Langlochführung. Auch ist das System komplett ungeeignet als Meßvorrichtung zu dienen, da nur ein Grenzwert durch den Schalter erkannt wird und dann ein entsprechendes Signal ausgelöst wird.

Des Weiteren ist aus dem Stand der Technik die US-Patentschrift 5,823,045 bekannt. Hier wird eine Vorrichtung zum Messen eines Volumens beschrieben, bei welcher ein verschiebbarer Stempel zum Bestimmen des Volumens einer mit einem Medium befüllbaren Blase dient. Da das Volumen bestimmt werden soll, muß der Stempel möglichst flächig auf der Blase aufliegen und verfälscht somit das Dimensionsergebnis (Abstand in einer Dimension). Die Anordnung ist im Übrigen in keinster Weise geeignet eine Meßvorrichtung insbesondere im Kraftfahrzeugsitz zu realisieren. Sie dient nur zum Anzeigen eines gewissen Volumeninhaltes, nicht aber für eine genaue, quantitative Bestimmung.

Die Erfindung hat es sich zur Aufgabe gemacht eine Meßvorrichtung zu schaffen, mit deren Hilfe zumindest ein Maß einer mit einem Medium gefüllten Blase ermittelt werden kann und welches unabhängig von der Außentemperatur und sonstiger störender Einflüsse bestimmt wird.

Zur Lösung der erfindungsgemäßen Aufgabe wird eine Meßvorrichtung für das Erfassen zumindest eines Maßes oder einer Dimension einer mit einem Medium gefüllten Blase vorgeschlagen, wobei mindestens ein Taster vorgesehen ist, der an der Haut der Blase anliegt oder in der Haut oder in dem die Blasenhaut umgebenden Material eingebettet ist. Die erfindungsgemäße Lösung besteht darin, daß der Taster mit einem Sensor zusammenwirkt, der die jeweilige Stellung des Tasters bezüglich eines Referenzpunktes oder einer Referenzfläche ermittelt und einem dem ermittelten Abstand zwischen dem Taster und der Referenzfläche beziehungsweise dem Referenzpunkt entsprechenden Wert oder Information ausgibt.

Der erfindungsgemäße Vorschlag erlaubt es, von dem in der Blase herrschenden Druck unabhängigen Dimensionswert zu liefern und zwar über das ganze Intervall der zu messenden Breite beziehungsweise des Maßes. Durch den erfindungsgemäßen Vorschlag wird daher eine Meßvorrichtung zur Verfügung gestellt, die prinzipiell dazu dient, in einem komplexeren System, zum Beispiel einem Steuer-Regel-Kreis zur entsprechenden Festlegung der Sitzoberflächenkontur mitzuwirken.

Die Erfindung sieht dabei vor, daß die Taster sowohl an der Haut der Blase anliegen, wie auch in der Haut oder in dem die Blasenhaut umgebenden Material eingebettet ist. Die Meßvorrichtung dient zum Beispiel bei einer komplexeren Anwendung zur Bestimmung der Sitzkontur oder der Oberflächenbelastung eines Sitzes. Dabei ist es interessant, die durch die Blase bewirkte Maßänderung an der Sitzoberfläche, gegebenenfalls in gewissem Abstand zur eigentlichen Blase, zu bestimmen. Gleichwohl ist aber dieser Meßwert von der Ausdehung beziehungsweise Dimension der Blase abhängig. Wenn der Taster in das die Blase umgebende Material eingebracht ist, so kann dieser in bevorzugter Ausgestaltung insbesondere die Maßänderung aufgrund der Dimensionsänderung der Blase unmittelbar an der interessierenden Sitzoberfläche bestimmen.

Des Weiteren ist die Meßvorrichtung nicht allein darauf ausgelegt, einen entsprechenden Abstandswert entsprechend der Dimension der Blase zu liefern. In verschiedenen Anwendungen ist es auch ausreichend, wenn eine Belastungsinformation von der Meßvorrichtung produziert wird, die Meßvorrichtung also nur anzeigt, ob zum Beispiel der Sitz belastet also belegt ist oder nicht. In diesem Fall kann sich die Funktion der Meßvorrichtung auf eine "Schalterfunktion" reduzieren, wobei zum Beispiel der Wert 1 ausgegeben wird, wenn der Sitz belastet ist und der Wert 0 ausgegeben wird, wenn der Sitz nicht belastet ist. Diese Information kann zum Beispiel durch einen Vergleich dieser beiden Positionen ermittelt werden. Auch in diesem Fall wird die erfindungsgemäße Meßvorrichtung ausgenutzt, nur das ermittelte Ergebnis wird entsprechend anders aufbereitet.

Ein weiterer Vorteil der Erfindung ist, daß die Meßvorrichtung in der Blase leckagenunabhängig arbeitet. Da nicht der Druck, sondern die entsprechende Distanz unmittelbar gemessen wird, kommt es auf eine mögliche Leckage hierbei nicht an. Eine Leckage verfälscht daher nicht das Meßergebnis.

Dabei schlägt die Erfindung mehrere Varianten vor. Zum einen ist vorgesehen, daß der Taster entweder auf der Außen- oder Innenseite der Blasenhaut an dieser anliegt, oder in dieser eingebettet, zum Beispiel eingeschweißt, eingeklebt oder sonstwie integriert oder eingebaut ist. Darüberhinaus wirkt der Taster entweder zusammen mit einem ansich stillstehenden Referenzpunkt oder mit einem Referenzpunkt der seinerseits ebenfalls auf der Blasenhaut beweglich angeordnet ist. Referenzfläche und Referenzpunkt sind dabei synonym und gleichwertig. Je nach der geometrischen Auslegung der Meßvorrichtung kann dabei die Bezugnahme auf eine Referenzfläche (wenn diese zum Beispiel hinreichend parallel oder eben entsprechend der Meßvorschrift ist) oder auf einen Referenzpunkt ausgerichtet sein. Das erfindungsgemäße Konzept kann natürlich auch in einem, die Blasenhaut umgebenden Material eingebaut sein. Dies erlaubt es, die von der Blase herrührende Dimensionsänderung im Inneren eines Sitzes, an der der auf dem Sitz sitzenden Person zugewandten Oberfläche unmittelbar zu bestimmen und auszuwerten. Die Erfindung ist auf eine spezielle Auslegung hierbei nicht fixiert.

Wie bereits ausgeführt kann auch die/der zur Bestimmung des Abstandes herangezogene Referenzfläche/-punkt als Taster ausgebildet sein, der auf oder an der Blasenhaut anliegt. Somit ist im Prinzip eine symetrische Anordnung der beiden Taster möglich, die zum Beispiel als Meßgabel oder Meßvorrichtung ausbildbar ist. Umgekehrt ist es aber auch möglich, eine im Wesentlichen unbewegliche Anlagefläche als Referenzfläche vorzusehen, wobei die Anlagefläche in diesem Fall zum Beispiel eine Gehäusewand oder dergleichen sein kann.

In einer Variante werden mechanische Taster manuell an die Außenhaut der gefüllten Blase herangeführt und somit eine entsprechende Dimension (z.B. Abstand usw.) der Blase mechanisch gemessen. In einer wenig aufwendigen Ausführung handelt es sich hierbei um eine einfache Art Schublehre, mit welcher die Dimension der Base bestimmt wird. Es kann jedoch auch eine Art von Schalter verwendet werden, der von der Außenhaut der Blase betätigt wird. Denkbar sind ebenfalls elektrische, elektromechanische, magnetische, elektromagnetische oder elektronische Taster bzw. Sensorik, die je nach Stellung einzelne Werte an eine Steuerung abgeben und somit die Meßgröße bestimmbar ist.

Da es bei fest installierten Blasen jedoch nicht möglich ist nach jedem Füllen der Blasen, deren Dicke manuell zu messen, ist vorgesehen, wenigstens zwei Taster auf der Blasenhaut fest anzuordnen. Der Abstand dieser Taster zueinander kann nun auf verschiedene Weise vermessen werden, zum Beispiel durch mechanische, elektronische, optische oder auch druckabhängige Meßvorrichtungen oder sonstige (elektronische oder elektromechanische) Sensorik.

Die Taster können dabei auf der Außenseite der Blasenhaut oder auch auf deren Innenseite angeordnet sein. Alternativ ist eine Anordnung außen und innen auf der Blasenhaut denkbar.

In einer bevorzugten Ausgestaltung der Erfindung ist vorgesehen, daß die Taster je an wenigsten zwei, miteinander verbundenen, gabelartigen Schenkeln angeordnet sind. Hierbei trägt jeder Schenkel einen Taster. Die Anordnung kann dabei so gewählt sein, daß die Taster im Blaseninneren die Blaseninnenwand abtasten oder aber von außen die Blasenaußenhaut berühren und so den entsprechenden Wert ermitteln.

Für die Anordnung der Schenkel zueinander sind ebenfalls mehrere Möglichkeiten vorgesehen. In einer erfindungsgemäßen Variante sind die Schenkel starr miteinander verbunden und der Taster liegt unter Ausnützung der Eigenspannung des Schenkels an der Blasenhaut an. Dabei weist der Schenkel gerade im Anschlußbereich an den anderen Schenkel eine entspechende Eigenspannung auf, im Übrigen ist der Schenkel aber biegesteif, um den Meßwert nicht zu verfälschen. Alternativ ist es möglich, daß die Schenkel gelenkig miteinander verbunden sind. Dies kann durch ein kleines Filmscharnier oder Scharnier im Zwischenbereich zwischen den beiden Schenkeln in einfacher Weise realisiert werden.

In einer bevorzugten Ausgestaltung der Erfindung ist vorgesehen, daß Anliegemittel vorgesehen sind (zum Beispiel eine Feder oder dergleichen) die am Schenkel angeordnet sind und ein Anliegen des Tasters an der Blasenhaut bewirken. Durch eine solche, erfindungsgemäße Variante braucht auf eine entsprechende Eigenspannung der Schenkel kein Wert mehr gelegt werden, da dies durch ein separates, in der Regel auch billiges Bauteil, nämlich ein Anliegemittel (eine Feder, eine Blattfeder und dergleichen) realisiert werden kann. Gerade bei einer gelenkigen Anordnung der Schenkel zueinander ist dies eine kostengünstige Variante.

In einer bevorzugten Ausgestaltung der Erfindung ist vorgesehen, daß die Blasenhaut eine Lasche als Anlagemittel aufweist, welche den Schenkel führt. Das als Lasche ausgebildete Anlagemittel erreicht auch hier wieder ein sicheres Anliegen des Schenkels an der Blasenhaut und somit eine prinzipiell exakte Messung. Die Lasche erlaubt aber auch die Festlegung des Schenkels zumindest bezüglich eines Freiheitsgrades, das heißt, die Lasche führt auch den Schenkel innerhalb der Blase. Die Lasche ist dabei so ausgebildet, daß der Schenkel in ihr noch gleiten kann, wobei die Gleitbewegung für ein sicheres, exaktes Aufnehmen des Meßwertes notwendig ist, da sich die geometrischen Zuordnungen bei einer Bewegung der Blase relativ zueinander immer ändern kann und ein Gleiten des Tasters auf der Blasenhaut notwendig ist. Dabei läßt sich in diesem Fall auf zusätzliche Anliegemittel wie eine Feder und so weiter einfach verzichten, wodurch sich der Aufwand für die Meßvorrichtung deutlich verringert, die Lasche wird in einfacher Weise an die Blase angespritzt, aufgeklebt oder angeschweißt.

Um die Messung nicht zu stören beziehungsweise die Blase nicht zu verletzen, wird erfindungsgemäß in einer weiteren Variante vorgesehen, den Schenkel in dem den Taster tragenden Endbereich derart abgebogen auszubilden, daß das Ende von der Blasenhaut absteht. Ein Verhaken des Schenkels in der Blasenhaut wird dadurch zuverlässig vermieden. Da sich der Schenkel nicht verhaken kann wird auch die Messung nicht gestört und auch eine Verletzung der Blasenhaut zuverlässig vermieden.

Als Material für den den Taster tragenden Schenkel kommen im Wesentlichen alle bekannten Materialien in Frage. Bevorzugt werden insbesondere Kunststoffe, faserverstärkte Kunststoffe (glasfaser- oder kohlefaserverstärkte Kunststoffe), Metalle, Metalllegierungen, Federstahl oder auch Kombinationen der vorgenannten Werkstoffe in Betracht. Die Verwendung von faserverstärkten Kunststoffen oder Federstahl ergeben insbesondere Material mit einer gewissen Eigenspannung, die ein selbstständiges Anliegen des Schenkels an der Blasenhaut erleichtern.

In einer weiteren Variante der Erfindung wird vorgeschlagen, daß die Taster an einem scherenartigen Arm angeordnet sind. Die beiden Arme sind dabei gegebenenfalls gegenseitig gelenkig verbunden und tragen an einem anderen Ort den Sensor zur Aufnahme des entsprechenden Signales. Eine scherenartige Anordnung erlaubt zum Beispiel auch eine Anordnung der Meßvorrichtung auf der Außenseite der Blase.

Eine erste Ausführung einer mechanischen Vorrichtung zum Messen des Abstandes der Taster voneinander besteht darin, daß die Taster an wenigstens zwei gelenkig miteinander verbundenen Schenkel angeordnet sind und die Blase umgreifen. Durch Messen des durch die Schenkel eingeschlossenen Winkels und dem bekannten Abstand der Taster von dem Gelenk, läßt sich der Abstand der Taster voneinander bestimmen. In einer weiteren Variante ist es auch möglich, den Abstand der Schenkel in der Nähe des Gelenkes zu messen und, da dieser Abstand direkt proportional dem Abstand der Taster zueinander ist (in Abhängigkeit der Schenkellänge), läßt sich wiederum die Dicke der Blase errechnen.

In einer zweiten Ausführung der Erfindung sind die Taster verschiebbar an einer Führung gelagert und aus dem Abstand der Taster auf der Führung wird das Maß der Blase ermittelt. Es ist dabei vorteilhaft, die Taster an Schenkeln anzuordnen, die wiederum auf der Führung verschiebbar gelagert sind im Sinne einer Schublehre, wodurch es einfacher ist das Maß der Blase auf der Führung abzulesen.

Der Abstand der Taster zueinander läßt sich mit diesen vorgenannten Hilfsmitteln auch elektronisch ermitteln. Hierbei wird der Öffnungswinkel der gelenkig miteinander verbundenen Schenkel dadurch ermittelt, daß in der Nähe des Gelenkes ein Hall-Sensor oder ein kapazitiver Sensor angeordnet ist, wodurch sich durch den daraus bekannten Abstand der Abstand der Taster zueinander ermitteln läßt. Auch ist es möglich die Schenkel des Winkels mit einem Potentiometer zu verbinden und, aufgrund des durch das Potentiometer resultierenden Widerstandes, diesen Abstand zu ermitteln. Dadurch läßt sich wiederum der Abstand der Taster zueinander errechnen. Ebenso ist es möglich, die Schenkel der Winkel mit einem Dehnmeßstreifen zu verbinden, der, je nach Dehnung, einen unterschiedlichen Wert anzeigt. In einer weiteren Variante der Erfindung ist vorgesehen, als Sensor ein Piezokristall einzusetzen. Der bewegliche Taster wirkt dabei auf den Piezokristall und setzt die auf den Kristall wirkende, der Dimension entsprechende Belastung in ein elektronisch auswertbares Signal, eine Spannung um.

Erfindungsgemäß ist auch vorgesehen, daß nicht nur der Öffnungswinkel zwischen den beiden Schenkeln bestimmt wird, sondern an einer definierten Stelle der Öffnungsabstand zwischen den beiden Schenkeln. Hierbei kann, gemäß dem Strahlengesetz, in einfacher Weise der tatsächliche Abstand zwischen den beiden Tastern bestimmt werden, wenn der Abstand im Bereich des Gelenkes oder des Verbundes zwischen den beiden Schenkeln bekannt ist.

Erfindungsgemäß werden verschiedene Sensoren vorgeschlagen, die bei der erfindungsgemäßen Meßvorrichtung eingesetzt werden können. Prinzipiell sind alle Sensoren, die zur Messung eines Abstandes dienen, einsetzbar. Als günstig hat sich der Einsatz eines Hall-Sensors erwiesen, der mit einem Magneten zusammenwirkt. Dabei werden die beiden Elemente des Sensors, der Hall-Sensor und der Magnet je auf einem der beiden Schenkel beziehungsweise auf einem Schenkel und der Referenzfläche beziehungsweise dem Referenzpunkt angeordnet. Es hat sich dabei ergeben, daß der Einsatz des Hall-Sensors vorteilhaft ist, da er zum einen günstig realisierbar ist und zum anderen ein verhältnismäßig genaues, gut reproduzierbares und störungsunanfälliges Signal ergibt.

Des Weiteren ist es möglich einen Dehnmeßstreifen einzusetzen. Auch ist es möglich induktive Näherungsschalter einzusetzen, die ebenfalls berührungslos arbeiten. Auch ist der Einsatz von Laserwegaufnehmern möglich, bei welchen ein Laserstrahl von dem Taster reflektiert wird und über die Winkelbeziehung die Distanz berechnet wird. Auch ist der Einsatz eines kapazitiven Näherungsschalters möglich, welcher mit einem Oszillator ausgestattet ist, der sein Schwingungsverhalten ändert, wenn er sich einem Gegenstand nähert. Auch der Einsatz von Ultraschallsensoren ist möglich, wobei die Schallimpulse an Grenzflächen reflektiert werden und die Impulslaufzeit in Entfernung umgerechnet wird. Abschließend wird auch ein Wirbelstromabstandaufnehmer beziehungsweise -wegaufnehmer vorgeschlagen. Aufgrund eine magnetischen Flußänderung in einem Körper, die durch die Annäherung dieses Körpers an ein Magnetfeld entsteht, wird aufgrund des Induktionsgesetzes Spannung induziert, die als Weg- beziehungsweise Meßsignal abgreifbar ist. Auch ist der Einsatz eines thermischen Massendurchflußmeters (zum Beispiel bei mit Flüssigkeiten gefüllten Blasen) für die Messung des Abstandes denkbar. Der Einsatz der verschiedenen Sensoren ist in der erfindungsgemäßen Meßvorrichtung möglich, wobei die unterschiedlichen Sensoren unterschiedliche Charakteristiken haben und entsprechend einer Optimierung ausgewählt werden.

Die Verbindung von Hall-Sensoren mit Magneten als Sensor zur Abstandsmessung hat sich als unempfindlich gegen Störeinflüsse, langlebig und kostengünstig erwiesen.

Allgemein wird hierbei von Sensoren nicht nur von einem Bauteil gesprochen, sondern durchaus von mehreren Elementen, die zum Sensor (oder zur Sensorik) dazu gehören. Bei der Ausgestaltung des Sensors als Hall-Sensor, umfaßt der Sensor neben dem Hall-Sensor natürlich auch den Magneten. Andere Sensoren benötigen entspechende, zusätzliche Elemente nicht, wenn sie zum Beispiel auf Reflektion arbeiten.

In einer weiteren erfindungsgemäßen Variante ist vorgesehen, daß der Dehnmeßstreifen zumindest auf einem Schenkel des Tasters angeordnet ist und die Biegung des Schenkels mißt. Je nach Ausbildung der Geometrie kann es sich ergeben, daß durch die Verwendung des Dehnmeßstreifens verhältnismäßig kleine Wegänderungen zu messen sind, für die der Einsatz des Dehnmeßstreifens sehr günstig ist. Zum Beispiel kann die leichte Durchbiegung des Schenkels des Tasters durch den Dehnmeßstreifen ermittelt werden und hiervon, bei entsprechender Wahl und Berücksichtigung der Geometrie, ein Maß für die gewünschte Dimension abgeleitet werden.

Die gleichen elektronischen Meßmethoden lassen sich auch bei dem zweiten oben angeführten Ausführungsbeispiel anwenden.

Eine optische oder akustische Abstandsmessung ist ebenfalls möglich, wobei hier die Taster insbesondere im Inneren der Blase angeordnet sind und der Abstand dieser Taster zueinander durch Aussenden und Empfangen von Signalen ermittelt werden kann. Auf der einen Seite der Blasenhaut ist demnach ein Frequenzgeber angeordnet und auf der gegenüberliegenden Seite der Blasenhaut ein Aufnehmer oder ein Spiegel, der die optischen oder akustischen Signale reflektiert und an einen Frequenzaufnehmer abgibt, der auf der gleichen Seite wie der Frequenzgeber auf der Blasenhaut angeordnet ist.

Ebenfalls ist es möglich, die Taster mit einem Drucksensor auszustatten, der gegen ein Widerlager drückt, und je nach Druck der Blasenhaut gegen den Drucksensor sich ein reproduzierbarer Wert ermitteln läßt. Dieser Druck ist unabhängig von der Außentemperatur.

Vorteilhafterweise ist die gesamte Meßvorrichtung innerhalb der Blase angeordnet, so daß sie platzsparend und sicher untergebracht ist und den Sitzkomfort nicht stört.

Es reicht aus, die Blasen in nur einer Dimension zu vermessen. In weiteren Fällen ist es jedoch sinnvoll, die Werte der anderen beiden Dimensionen noch zu ermitteln. Dies erfordert eine umfangreiche Meßvorrichtung, die zum Beispiel rechtwinklig zur ersten orientiert ist.

In einer bevorzugten Ausgestaltung der Erfindung ist gefunden worden, daß der Sensor zwischen den beiden, die Taster haltenden Schenkel angeordnet ist. Dadurch ist es möglich, bei entsprechender, geometrischer Anordnung, den Strahlensatz auszunutzen, um den tatsächlichen Abstand der beiden Taster beziehungsweise die tatsächliche Dimension der Blase zu ermitteln. Dabei ist es günstig, daß der Sensor am Verbindungsbereich der Schenkel oder an deren Gelenk angeordnet ist. Um eine Meßverfälschung zu vermeiden wird dabei insbesondere ein verwindungsfreier Schenkel vorgeschlagen.

Gemäß der Erfindung muß der Sensor nicht zwingend am Taster, der an der Blasenhaut angeordnet ist, vorgesehen sein, der Sensor kann auch an dem den Taster tragenden Schenkel angeordnet sein. Auch ist es für die Ausgestaltung der Erfindung nicht wesentlich, ob nun der Hall-Sensor oder der Magnet auf dem Schenkel beziehungsweise der Referenzfläche angeordnet ist. Die kinematische Anordnung ist beliebig austauschbar und entspricht der Erfindung. Des Weiteren ist in einer Variante der Erfindung vorgesehen, daß der Taster selbst den Sensor bildet. Dies kann insbesondere dann von Vorteil sein, wenn Taster und Sensor integriert ausgebildet sind. Zum Beispiel befindet sich der Taster auf der Oberfläche der Blase und beinhaltet den Sensor, der zum Beispiel zu einer entsprechenden Referenzfläche eine Abstandsmessung durchführt.

Günstig ist es, wenn der Sensor und/oder der Magnet auf dem Schenkel beziehungsweise an der Blasenhaut aufgeklebt, eingeclipst, ein- oder umspritzt ist. Durch eine solche Ausgestaltung wird eine sichere Verbindung gewährleistet, die auch in Großserie kostengünstig herstellbar ist.

Nach einer Ausführung der Erfindung besteht die Haut der Blase aus einem elastischen Material, ähnlich dem eines Luftballons, welches eine Ausdehnung gleichmäßig in alle Richtungen zuläßt.

Eine derartige Auswahl des Materials erlaubt, daß die Blasenhaut auch bei geringer Füllung ständig gespannt ist und somit Unebenheiten auf einer Sitzoberfläche vermieden sind.

Bei dieser Ausführung der Erfindung ist es günstig, um eine bestimmte Oberflächenkontur zu erzielen, den Durchmesser bzw. die Dimension der einzelnen Blasen zu ermitteln. In einer weiteren Ausführung der Erfindung wird für die Blasenhaut ein unelastisches Material, ähnlich dem einer Luftmatratze verwendet. Dies hat den Vorteil, daß bei Überfüllen der Blase mit dem Medium die Außenkontur der Blase nur geringfügig verändert wird. Der Druck in der Blase steigt an. Um die Ausdehnung der Blase besser zu definieren, kann die Blase in einer Form aufgenommen sein, welche die Ausdehnung in nur eine Richtung, in Richtung der Sitzoberfläche zuläßt.

Als Form ist nach einer Ausgestaltung der Erfindung die Blase in Einzelfächer mit starren Außenwänden eingelegt, wobei diese Fächer in Richtung Sitzoberfläche offen sind und die sich gefüllte Blasenhaut aus dem Fach herauswölbt.

In einer weiteren Variante der Erfindung sind die Seitenwände und das Bodenteil selbst aus unelastischen Material hergestellt und nur die Abdeckung aus einem elastischen Material. Durch diese Ausführung ist das Erfassen der Dicke der Blasen vereinfacht, da einer der Taster, der auf dem Bodenteil der Blase eine fixe Position einnimmt und nur der andere Taster beim Füllen der Blase einen Weg zurücklegt. So kann die Meßvorrichtung wesentlich einfacher ausgeführt werden, da bei Verwendung der Ausführung nach Beispiel eins nur ein Schenkel verwendet werden muß, dessen Winkel zur Ebene des Blasenbodenteils vermessen wird.

Für eine zuverlässige Funktion der Meßvorrichtung ist vorgesehen, daß der den Taster tragenden Schenkel in der Blase, insbesondere in der Blasenwand befestigt ist. An dem Schenkel oder an dem Schenkelpaar ist ein entsprechender Ansatz zum Beispiel aus Folie oder einstoffig, wie das Material des Schenkels, vorgesehen, der in die Blase beziehungsweise den Blasenrand eingearbeitet, eingeklebt, eingeschweißt oder sonst befestigt werden kann. Dadurch ist der als Meßgabel ausgebildete Schenkel in der Blase fixiert.

Für das Auslesen der von dem Sensor gelieferten Werte stehen Datenleitungen zur Verfügung, gegebenenfalls ist auch eine Stromversorgung für die Sensorik im Blaseninneren notwendig, die durch die Blasenhaut zu führen sind. Es ist auch möglich ein drahtloses Auswerten der Werte aus der Blase vorzusehen. Hierdurch wird das Einarbeiten einer "Schwachstelle" der Blasenhaut vermieden, da natürlich eine dichte Blase gewünscht wird.

Neben einer Einarbeitung der Datenleitungen beziehungsweise Versorgungsleitungen in der Blasenhaut ist auch vorgesehen, Schlauchdurchführungen vorzusehen, die dicht in der Blasenhaut eingearbeitet werden und zur Aufnahme von Datenleitungen und dergleichen dienen.

Die Erfindung betrifft in gleicher Weise auch ein System zum Einstellen einer Oberflächenkontur, insbesondere eines Sitzes. In Sitzen von Kraftfahrzeugen werden vorgenannte Systeme eingesetzt, um, zum Beispiel bei verschiedenen Fahrern und hoher Benutzung des Sitzes, unterschiedliche Oberflächenkonturen zur Verfügung zu stellen. Die bekannten Lösungen funktionieren durch eine Auswertung des in der Blase herrschenden Drucks. Da diese Verfahrensweise insbesondere temperaturabhängig ist, sind solche Systeme verhältnismäßig ungenau. Die Erfindung hat es sich daher auch zur Aufgabe gemacht, ein System, wie vorbeschrieben, dahingehend zu schaffen, welches möglichst unabhängig von Außentemperatur oder sonstigen störenden Einflüssen ist.

Zur Lösung dieser Aufgabe wurde ein System zum Einstellen einer Oberflächenkontur vorgeschlagen, wobei unter der Oberfläche eine oder mehrere Blasen angeordnet sind und zumindest eine Blase eine Meßvorrichtung zugeordnet ist. Vorteilhafterweise ist der Meßvorrichtung eine Steuerung zugeordnet beziehungsweise umgekehrt, der Steuerung eine Meßvorrichtung, so daß, abhängig vom Wert der Messung, ein Füllen und Entleeren der Blase mit einem Medium gesteuert werden kann. Der von der Meßvorrichtung bestimmte Ist-Wert wird dabei mit einem Sollwert, wie er der Steuerung zum Beispiel durch entsprechende Stellglieder (Potenzometer oder Datenspeicher) eingegeben wird, verglichen, wobei die Steuerung versucht den Ist-Wert dem Soll-Wert anzugleichen. Aufgrund der druckunabhängigen Ausführung dieses Systems zum Einstellen einer Oberflächenkontur ist das System prinzipiell unabhängig von Temperatureinflüssen und äußeren Lasten, es kommt nur auf die tatsächliche Positionierung der Blasenhaut zur Einstellung der Oberflächenkontur an. Die Blasen werden über eine Pumpe oder eine zentrale Luftversorgung (zum Beispiel Druckluft für Bremsen und so weiter) gefüllt und/oder geleert. Ventile erlauben ein Unterbrechen oder Durchgängigkeit der Zuführung.

Erfindungsgemäß wird nicht zwingend vorgesehen, daß jede Blase der Anordnung eine Meßvorrichtung aufweist, es ist vielmehr auch vorgesehen, daß die Steuerung mit einer oder wenigen Meßvorrichtungen zusammenwirkt, die mehrere Blasen regelt, wobei die Steuerung die entsprechenden Werte für die Blasen, in welcher keine Meßvorrichtung vorgesehen ist, entsprechend extrapoliert oder aus der Empierik heraus (mit Vergleich mit dem Datenspeicher) bestimmt.

Gemäß der erfindungsgemäßen Ausgestaltung ist vorgesehen, daß eine oder mehrere Blasen mit dem Medium befüll- oder auch entleerbar ist/sind. Dabei müssen nicht alle Blasen auch eine Meßvorrichtung besitzen. Es ist auch möglich, reine Meßblasen vorzusehen, also Blasen, die eine Meßvorrichtung aufnehmen, selber aber nicht mit einer externen Luftversorgung zu einer Veränderung des Füllgrades verbunden sind. Alternativ hierzu ist natürlich auch vorgesehen, daß Blasen mit Meßvorrichtung und der Möglichkeit zum Befüllen beziehungsweise zum Entleeren der Blase ausgestattet sind.

In einer bevorzugten Ausgestaltung der Erfindung ist vorgesehen, daß die Steuerung ein Zeitglied aufweist und eine von der Meßvorrichtung aufgenommene Abweichung des Ist-Wertes von dem der Steuerung zugrundegelegten Soll-Wertes erst nach Abarbeitung des Zeitgliedes (=Verzögerung) zu einer Ansteuerung von Pumpen und/ oder Ventilen führt. Somit wird ein zu kurzfristiges Reagieren des Systems vermieden, wenn zum Beispiel eine kurzfristige Entlastung einer Blase erfolgt, wird nicht automatisch die Dimension durch Ab- oder Zupumpen von Medium verändert, sondern erst nach einer gewissen Verweildauer entsprechende Maßnahmen ergriffen. Natürlich wird in der Zwischenzeit der Vergleich von Soll- und Ist-Wert weitergeführt, um gegebenenfalls das Ansteuern der Pumpe zu unterbinden, wenn nämlich Soll- und Ist-Wert sich wieder aneinander annähern.

In einer weiteren Variante der Erfindung ist jeder Blase eine eigene Pumpe und ein Ventil zugeordnet, so daß jede Blase individuell angesteuert werden kann. Als Medium zum Füllen der Blasen ist ein Gas, ein Gasgemisch oder eine Flüssigkeit vorgesehen, wobei sich Luft besonders eignet, da diese direkt aus der Umgebung entnommen werden kann. Ein besonderes Gas, ein Gasgemisch oder eine Flüssigkeit müßten zum Beispiel in einem Vorratsbehälter bereitgestellt werden. Diese Medien zeichnen sich jedoch dadurch aus, daß gegebenenfalls deren Ausdehnungskoeffizient geringer ist als der von Luft und somit deren Volumenänderung bei Temperaturschwankungen geringer ausfallen.

Des Weiteren umfaßt die Erfindung ein System zur Erkennung einer Flächenbelastung. Oftmals ist es günstig abzufragen, ob eine Oberfläche, zum Beispiel die Sitzfläche oder die Rückenlehne eines Sitzes benützt werden, also ob hier eine Person oder ein Gegenstand ruht, um hiervon abgeleitet zum Beispiel weitere Maßnahmen zu ergreifen. Das erfindungsgemäße System zum Erkennen einer Flächenbelastung nützt dabei eine Meßvorrichtung zum Ermitteln einer Abstandsinformation aus. Als Meßvorrichtung ist insbesondere die erfindungsgemäße Meßvorrichtung einsetzbar, es ist aber auch möglich, eine andere Meßvorrichtung, die nicht eine Blase ausnützt, zu verwenden. Das System ist dabei so ausgebildet, daß von der Meßvorrichtung an eine Überwachungseinheit, die zum Beispiel mit der allgemeinen Steuerung identisch oder teilidentisch sein kann oder von dieser getrennt ausgebildet ist, die durch die Konturveränderung bedingte Änderung des Abstandswertes und/oder Belastungsinformation ausgibt. Hieraus ist es möglich, weitere Szenarien in der Steuerung beziehungsweise Überwachungseinheit ablaufen zu lassen, wenn eine entsprechende Information über die Sitzflächenbelastung bekannt ist. Ergänzend hierzu können natürlich Druck und/oder Temperatur in der Blase mitbestimmt werden beziehungsweise andere Parameter ausgewertet werden.

Die Überwachungseinheit ist hierbei als Teil der Steuerung ausgebildet oder eigenständig, autark ausgebildet, wobei diese dann zum Beispiel einer übergeordneten Steuerung oder anderen Elementen entspechende Informationen zuleitet oder von diesen abhängig ist.

Die Erfindung beansprucht ebenfalls einen Sitz mit Mitteln zur Veränderung der Kontur der dem Körper zugewandten Sitzoberfläche und eine Meßvorrichtung zur Bestimmung dieser Oberflächenkontur. Hierbei besteht der Sitz aus einer Sitzfläche und einer daran angeordneten Rückenlehne, wobei als Mittel zur Veränderung der Kontur mit einem Medium zu füllende Blasen vorgesehen sind, die auf der dem Körper zugewandten Seite des Sitzes angeordnet sind oder in einer weiteren Ausführung der Erfindung in den Sitz selbst unterhalb der Sitzoberfläche. Je nachdem wie stark die Blasen mit dem Medium gefüllt werden, läßt sich die Kontur der Sitzoberfläche verändern und dem darauf sitzenden Körper anpassen.

In einer bevorzugten Ausgestaltung der Erfindung ist vorgesehen, daß eine Steuerung beziehungsweise die Überwachungseinheit durch Auswerten des von der Meßvorrichtung ausgegebenen Wertes beziehungsweise der Information und gegebenenfalls unter Berücksichtigung des in der Blase herrschenden Drucks und gegebenenfalls der Temperatur feststellt, in welcher Weise der Sitz beansprucht wird, indem die Steuerung die verschiedenen Parameter mit in einem Parameter-Speicher hinterlegten Parametersätzen vergleicht und den Parametersätzen verschiedene Beanspruchungsprofile zugeordnet sind. Durch eine solche Ausgestaltung wird erreicht, daß verschiedene Beanspruchungsprofile detektierbar sind und in Abhängigkeit dieser verschiedenen Profile auch verschiedene Maßnahmen einleitbar sind. Solche Maßnahmen können zum Beispiel in einer entsprechenden Auswertung dahingehend liegen, daß zum Beispiel entschieden wird, ob ein Erwachsener oder ein Kind den Sitz belastet, oder ob eine Bierkiste oder eine Person auf dem Sitz ruht. In Abhängigkeit dieser Information können wiederum unterschiedliche Szenarien ablaufen. Zum Beispiel kann eine Gurtstraffvorrichtung oder ein Airbag entsprechend angesteuert werden, wenn klar ist, ob ein Kind oder ein Erwachsener auf dem Sitz ruht. Der Anwendungsbereich ist schier grenzenlos.

Um diese Erkenntnis zu erzielen, sieht die Erfindung vor, daß die von der Meßvorrichtung ausgegebenen Werte entsprechend aufbereitet werden und mit in einem Parameter-Speicher hinterlegten Parametersätzen verglichen werden und so das entsprechende Beanspruchungsprofil zugeordnet wird.

In einer anderen Anmeldung des gleichen Anmelders wird wird ein System zum Verändern der Oberflächenkontur von Sitzen vorgeschlagen, das ein gleichmäßiges Füllen aller Blasen und ein Füllen gezielt einzelner Blasen vorsieht. Ebenfalls soll die Kontur durch Umpumpen des Mediums von einer Blase in eine andere oder durch Entlüften einzelner Blasen, während gegebenenfalls andere Blasen gleichzeitig gefüllt werden, erlaubt. Um jedoch eine reporduzierbare Kontur herzustellen ist es notwendig, die Dicke der einzelnen Blasen zu erfassen, den Wert zu speichern und an eine Steuerung weiterzugeben. Für diesen Zweck eignet sich eine Meßvorrichtung, wie beansprucht, jedoch auch Meßvorrichtungen die beispielsweise nur das Volumen beziehungsweise den Druck des Mediums in der Blase messen und so weiter.

Die Erfindung ist in der Zeichnung schematisch dargestellt. Es zeigen:
- Fig. 1: in einem Blockschaltbild die schematische Ansicht der Erfindung;
- Fig. 2: in einem dreidimensionalen Ausschnitt die erfindungsgemäße Meßvorrichtung und
- Fig. 3: in einem Blockschaltbild ein erfindungsgemäßer Sitz.

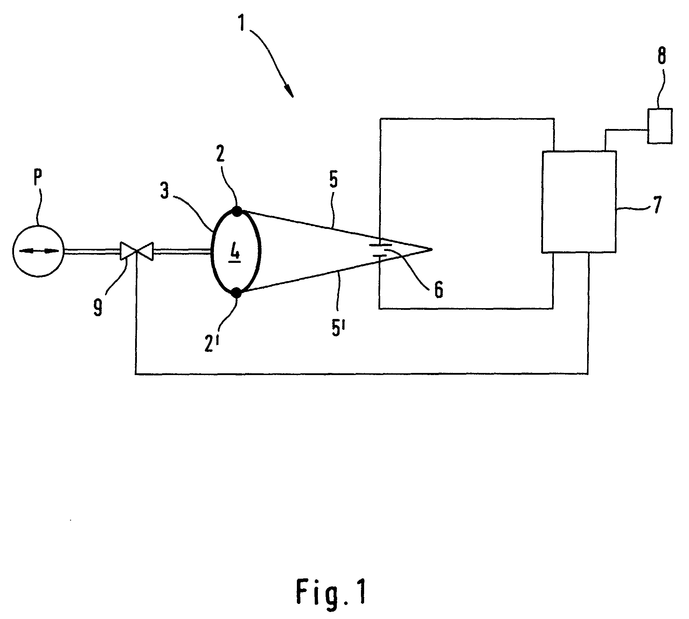

Eine erfindungsgemäße Meßvorrichtung 1 ist in der Zeichnung in Fig. 1 dargestellt. Mit 4 ist eine Blase bezeichnet, die über ein von einer Pumpe P über ein Ventil 9, beispielsweise ein Elektromagnetventil, geführt werden wird. Die Pumpe P kann auch dazu vorgesehen sein, das sich in der Blase 4 befindende Medium wieder abzusaugen. Es reicht somit eine einfach wirkende Pumpe für das Füllen der Blase aus, wobei zum Entleeren nur ein Ventil 9 geöffnet wird oder eine doppelt wirkende Pumpe mit Pump- und Saugfunktion.

An der Blase 4 sind zwei Taster 2, 2' angeordnet, die einander diametral gegenüberliegen. In diesem Fall sind sie auf der Außenseite der Blasenhaut 3 angeordnet. Diese Taster 2, 2' sind mit zwei Schenkeln 5, 5' verbunden, deren Winkel zueinander veränderbar ist. In der Nähe des Gelenkes dieser miteinander verbundener Schenkel 5, 5' ist ein Sensor 6 vorgesehen, der den Abstand der Schenkel 5, 5' an dieser Stelle mißt. Aufgrund der bekannten Schenkellänge zwischen den Meßpunkten des Sensors 6 und den Tastern 2, 2' läßt sich der Durchmesser der Blase 4 zwischen den Tastern 2, 2' berechnen. Dieser Wert des Sensors 6 wird an eine Steuerung 7 weitergegeben, die wiederum das Ventil 9 schaltet, das die Pumpe P mit der Blase 4 verbindet. Vorteilhafterweise wird der von dem Sensor 6 abgegebene Wert in einem Speicher 8 gespeichert (Memoryfunktion), so daß die Größe der Blase 4 reproduzierbar hergestellt werden kann. Diese Meßmethode ist temperatur- und belastungsunabhängig!

Eine derartige Meßvorrichtung 1 ist insbesondere dafür vorgesehen, in Sitzen, unter anderem in Sitzen für Kraftfahrzeuge verwendet zu werden, wobei mehrere Blasen im Polster des Sitzes sowohl im Rückenteil als auch im Sitzbereich die Oberflächenkontur eingelassen sind, womit die Oberflächenkontur verändert werden kann. Insbesondere zur Unterstützung der Lordose kann individuell auf den Fahrer abgestimmt durch unterschiedliches Aufblasen von in dem Sitz eingelassenen Blasen die Sitzkontur verändert werden. Dabei ist jeder Blase eine eigene Meßvorrichtung zugeordnet.

Eine derartige Anordnung von Blasen und Meßvorrichtungen kann jedoch auch außerhalb eines Sitzes Verwendung finden, zum Beispiel in einer Matte, die über einen üblichen Sitz gelegt werden kann, wobei jedoch das Meßverfahren das gleiche bleibt wie beschrieben.

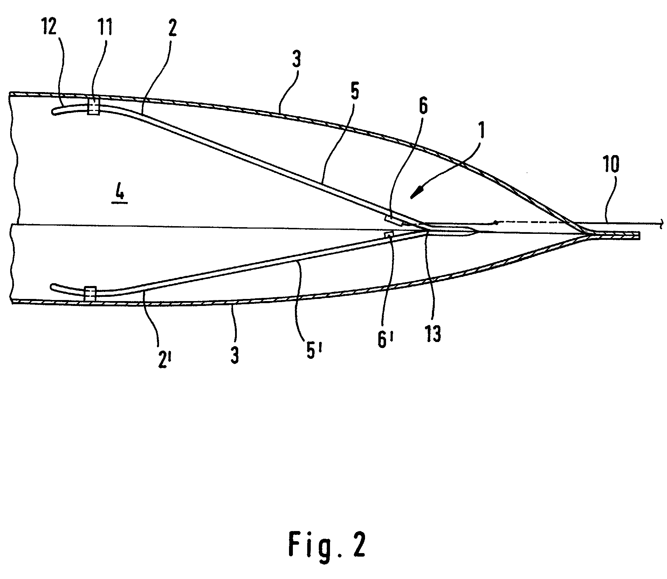

In Fig. 2 ist eine möglich Ausführungsform der Erfindung gezeigt. Im Inneren der Blase 4, die hier im Schnitt teilweise gezeichnet ist und von der Blasenhaut 3 begrenzt wird, befindet sich die komplette Meßvorrichtung 1. Die Meßvorrichtung 1 besteht bei dem hier gezeigten Ausführungsbeispiel aus zwei winklig zueinander angeordneten Schenkeln 5, 5'. Im Gelenk 13 sind die beiden Schenkel miteinander verbunden. Es kann zum einen ein Gelenk hier vorgesehen sein oder aber die Gelenkigkeit aufgrund der Eigenflexibilität des Schenkelsmateriales der Schenkel 5, 5' bewirkt werden. Im Bereich des Gelenkes 13 ist der Sensor 6, 6' angeordnet. Wie bereits ausgeführt, kann der Sensor 6, 6' hier aus mehreren Elementen bestehen, in dem hier gezeigten Ausführungsbeispiel besteht er aus dem Hall-Sensor 6 und dem dazugehörigen Magnet 6'. Die beiden Elemente des Sensors befinden sich dabei je auf einem der Schenkel 5, 5' in relativer Nachbarschaft, um eine entsprechende Messung zuzulassen. Die Schenkel 5, 5' ihrerseits sind so ausgebildet, daß sie auf der Innenseite der Blasenhaut 3 an dieser anliegen. Es sind hierbei an der Blasenhaut 3 innenliegende Laschen 11 vorgesehen, durch die das Ende des Schenkels durchsteckbar ist und so eine Führung erfahren. Der Schenkel 5 ist dabei aber nicht bezüglich der Blasenhaut festgelegt, sondern es ist noch eine Bewegung im Wesentlichen rechtwinklig zur Längserstreckung der Lasche 11 möglich, um einen entspechenden Längenausgleich zu erlauben. Bei diesem Ausführungsbeispiel wirden dann die Schenkel 5, 5' in ihrem Nahtbereich am Gelenk 13 mit der Blase verbunden und festgelegt.

Es ist auch eine andere Variante möglich, nämlich daß die Schenkelenden im Bereich der Lasche fest mit der Blasenhaut 3 verbunden, zum Beispiel eingespritzt, geklebt oder verschweißt werden, und dann der gelenkige Bereich 13 frei ist und einen Längenausgleich erlaubt.

Die durch Hall-Sensor 6 und Magnet 6' gebildete Sensor beziehungsweise Sensorik ist mit Datenleitungen beziehungsweise Versorgungsleitungen 10 verbunden, die durch die Blasenhaut 3 geführt sind. Das an der Blasenhaut anliegende Ende des Schenkels 5 ist nach unten abgerundet 12, dadurch wird ein Verhaken oder ein Verletzen der Haut vermieden.

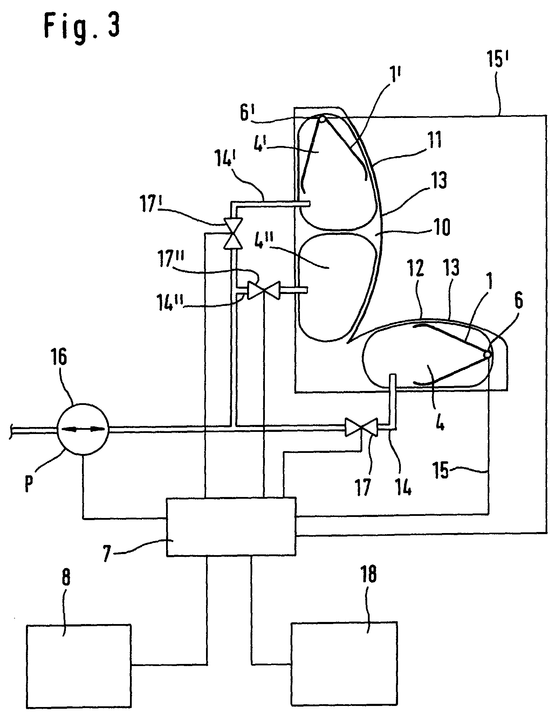

In Fig. 3 ist die Erfindung nochmals als Blockschaltbild gezeigt. Der Sitz 10 weist eine Rückenlehne 11 und eine Sitzfläche 12 auf. Unterhalb der Sitzoberfläche 13 befinden sich jeweils mehrere Blasen 4, 4', 4''. Entsprechend dem Befüllungsgrad der Blasen 4, 4', 4'' wird die Oberflächenkontur der Sitzoberfläche 13 gebildet.

In dem hier gezeigten Beispiel befinden sich in den Blasen 4, 4' auch je eine Meßvorrichtung 1, 1'. Die Meßvorrichtung ist so ausgestaltet wie vorher beschrieben. Der Inhalt der Blasen 4, 4' ist auch durch eine Leitung 14, 14' befüll- oder entleerbar.

Die Funktionsweise des erfindungsgemäßen Sitzes mit dem ebenfalls erfindungsgemäßen System ist wie folgt:

Die in der Sitzfläche 12 vorgesehene Meßvorrichtung 1 in Blase 4 erzeugt über den Sensor 6 entweder einen entsprechenden Abstandswert oder eine Belastungsinformation, die der Steuerung 7 über die Datenleitung 15, 15' zugeleitet wird. Die Steuerung 7 umfaßt dabei gegebenenfalls auch einen Speicher 8, in welchem insbesondere Parameter abgelegt sind, um ein entsprechendes Benutzungsprofil zu erstellen. Die Steuerung 7 kann auch als Überwachungseinheit modulhaft ausgebildet sein.

Die Steuerung 7 wirkt über die Luftversorgung 16, zum Beispiel eine beidseitig wirkende Pumpe dahin, daß die an der Luftversorgung 16 angeschlossenen Blasen 4, 4', 4'' entweder befüllt oder entleert werden. Um die jeweiligen Befüllungen zu realisieren sind mehrere Ventile 17, 17', 17'' in den jeweiligen Leitungen 14, 14', 14'' eingebaut, die jeweils von der Steuerung 7 aus regelbar sind.

Es ist möglich, daß reine Meßblasen vorgesehen sind, es handelt sich hierbei um Blasen die nur eine Meßvorrichtung aber keine Befüll- oder Entleermöglichkeit über eine Medienleitung besitzen. In dem erfindungsgemäßen Sitz ist es aber auch möglich, daß Blasen 4'' vorgesehen sind, die keine Meßvorrichtung aufnehmen. Deren Kontur wird dann zum Beispiel durch die andere Meßvorrichtung 1' mittelbar mit erfaßt und eingestellt.

Die vorbeschriebene Ausgestaltung wird zum Beispiel für das Einstellen eines bestimmten Benutzungsprofiles realisiert. Die Erfindung erlaubt aber in einer Variante auch, daß über die Sensoren 6 nur eine Belastungsinformation ausgelesen wird, und die Steuerung 7 eine entsprechende Information an ein weiteres Fahrzeuggerät, zum Beispiel dem Airbag 18, weitergibt. Dementsprechend ist es möglich, falls der Airbag benötigt wird, dessen Funktionalität in Abhängigkeit der auf dem Sitz 1 ruhenden Person abzustimmen. In diesem Fall gibt der Sensor 6 keinen (kontinuierlichen) Meßwert aus, sondern er gibt nur eine Belastungsinformation, vergleichbar der Entscheidung "Sitz wird belastet" oder "Sitz wird nicht belastet". Nach der Erfindung ist es auch möglich, eine Vielzahl weiterer Fahrzeuginformationen wie Fahrzeuggeschwindigkeit, Querbeschleunigung (zum Beispiel bei Kurvenfahrten), Traktion und/oder Bremsleistung auszuwerten oder zu berücksichtigen. Es ist daher möglich, sowohl einen Aktiv- oder auch Passivsitz zu realisieren, entsprechend der Ausgestaltung der Steuerung 7.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Meßvorrichtung für das Erfassen zumindestens eines Maßes oder einer Dimension einer mit einem Medium gefüllten Blase, wobei mindestens ein Taster vorgesehen ist, der an der Haut der Blase anliegt, in der Haut oder in dem die Blasenhaut umgebenden Material eingebettet ist, **dadurch gekennzeichnet, daß** der Taster (2, 2') mit einem Sensor (6) zusammenwirkt, der die jeweilige Stellung des Tasters (2, 2') bezüglich eines Referenzpunktes oder einer -fläche ermittelt und einen dem ermittelten Abstand zwischen dem Taster und der/dem Referenzfläche/-punkt entsprechenden Wert oder Information ausgibt.

2. Meßvorrichtung nach Anspruch 1, **dadurch gekennzeichnet**, **da**ß die/der Referenzfläche/-punkt ebenfalls von einem an der Blasenhaut (3) anliegenden Taster (2, 2') gebildet ist oder die/der Referenzfläche/-punkt von einer im Wesentlichen unbeweglichen Anlagefläche gebildet ist oder daß sich die/der Referenzfläche/-punkt an der Blasenhaut (3) beziehungsweise in dem die Blasenhaut umgebenden Material befindet und sich mit deren Bewegung mitbewegt.

3. Meßvorrichtung nach einem oder mehreren der vorhergehenden Ansprüche, **dadurch gekennzeichnet, daß** der/die Taster (2, 2') auf der Außen- und/oder auf der Innenseite der Blasenhaut (3) angeordnet ist/sind und/oder daß die gesamte Meßvorrichtung innerhalb der Blase angeordnet ist.

4. Meßvorrichtung nach einem oder mehreren der vorhergehenden Ansprüche, **dadurch gekennzeichnet, daß** die Taster (2, 2') je an einem, insbesondere miteinander verbundenen, gabelartigen Schenkel (5, 5') angeordnet sind und/oder die Schenkel (5, 5') starr miteinander verbunden sind und der Taster (2, 2') unter Ausnützung der Eigenspannung des Schenkels (5, 5') an der Blasenhaut (3) anliegt und/oder die Schenkel (5, 5') gelenkig miteinander verbunden sind und/oder daß Anliegemittel, zum Beispiel eine Feder, an dem Schenkel vorgesehen sind, die ein Anliegen des Tasters (2, 2') an der Blasenhaut bewirkt und/oder daß die Blasenhaut (3) eine Lasche (11) als Anlagemittel aufweist, welche den Schenkel (5) führt und/oder der den Taster (2, 2') tragende Schenkel (5, 5') in der Blase (4), insbesondere in der Blasenwand (3) oder in dem die Blase umgebenden Material befestigt ist.

5. Meßvorrichtung nach einem oder mehreren der vorhergehenden Ansprüche, **dadurch gekennzeichnet, daß** der Schenkel (5, 5') aus Kunststoff, faserverstärktem Kunststoff, Metall, Metalllegierung, Federstahl oder einer Kombination der vorgenannten Werkstoffe besteht.

6. Meßvorrichtung nach einem oder mehreren der vorhergehenden Ansprüche, **dadurch gekennzeichnet, daß** die Taster an einem scherenartigen Arm angeordnet sind und/oder die Taster auf einer Führung verschieblich gelagert sind und aus dem Abstand der Taster auf der Führung das Maß der Blase ermittelt wird.

7. Meßvorrichtung nach einem oder mehreren der vorhergehenden Ansprüche , **dadurch gekennzeichnet, daß** als Sensor (6) ein Hall-Sensor mit Magnet, ein kapazitiver oder induktiver Sensor, ein Piezokristall, ein Ultraschallsensor, Wirbelstromabstandsaufnehmer, ein Potentiometer, ein optischer oder elektronischer Sensor, ein Dehnungsmeßstreifen oder dergleichen vorgesehen sind.

8. Meßvorrichtung nach einem oder mehreren der vorhergehenden Ansprüche, **dadurch gekennzeichnet, daß** der Sensor (6, 6') zwischen den beiden die Taster (2, 2') haltenden Schenkeln (5, 5') angeordnet ist und/oder daß der Sensor (6, 6') am Verbindungsbereich (13) der Schenkel (5, 5') oder an deren Gelenk angeordnet ist und/oder der Schenkel (5, 5') den Sensor und/oder den Magneten trägt, wobei der Sensor und/oder Magnet auf dem Schenkel aufgeklebt, eingeclipst, ein- oder umspritzt ist.

9. Meßvorrichtung nach einem oder mehreren der vorhergehenden Ansprüche, **dadurch gekennzeichnet, daß** als Sensor (6, 6') ein Magnet und ein Hall-Sensor vorgesehen ist und ein erster Schenkel (5) den Magneten und ein zweiter Schenkel (5') den Hall-Sensor trägt und/oder der Taster (2, 2') den Sensor (6, 6') trägt beziehungsweise der Taster den Sensor bildet und/oder der Taster (2, 2') den Hall-Sensor oder den Magneten aufweist und die/der Referenzfläche/-punkt den Magneten beziehungsweise Hall-Sensor trägt.

10. Meßvorrichtung nach einem oder mehreren der vorhergehenden Ansprüche, **dadurch gekennzeichnet, daß** der Dehnmeßstreifen zumindest auf einem Schenkel angebracht ist und die Biegung des Schenkels mißt.

11. Meßvorrichtung nach einem oder mehreren der vorhergehenden Ansprüche, **dadurch gekennzeichnet, daß** der in der Blase herrschende Druck und/oder gegebenenfalls die Temperatur des Mediums bestimmt wird.

12. Meßvorrichtung nach einem oder mehreren der vorhergehenden Ansprüche, **dadurch gekennzeichnet, daß** die zum Auslesen der Werte vorgesehene Datenleitungen (10) und/oder Versorgungsleitungen aus der Blase (4) herausgeführt werden und/oder ein drahtloses Auslesen der Werte aus der Blase (4) vorgesehen ist und/oder die Datenleitung (10) dicht mit der Blasenhaut (3) verbunden ist und/oder eine insbesondere dichte Schlauchdurchführung in der Blasenhaut (3) zur Aufnahme von Datenleitungen (10) und dergleichen vorgesehen ist.

13. System zum Einstellen einer Oberflächenkontur, insbesondere eines Sitzes, wobei unter der Oberfläche eine oder mehrere Blasen angeordnet sind und die Kontur der Blasen die Oberflächenkontur bewirkt, **dadurch gekennzeichnet, daß** zumindest eine Blase (4) eine Meßvorrichtung (1) insbesondere nach einem oder mehreren der vorhergehenden Ansprüche und eine Steuerung (7) zugeordnet ist, die abhängig vom Wert der Messung und einem Soll-Wert ein Füllen und Entleeren zumindest einer Blase mit einem Medium steuert und entsprechend eine oder mehrere Pumpe/n, Luftversorgung und/oder Ventile regelt.

14. System zum Einstellen einer Oberflächenkontur nach Anspruch 13, **dadurch gekennzeichnet, daß** nicht jede Blase der Anordnung eine Meßvorrichtung aufweist und die Steuerung die entsprechende Oberflächenkontur zwischen verschiedenen Blasen bestimmt und/oder als Medium zum Füllen der Blasen ein Gas bzw. Gasgemisch, Luft oder eine Flüssigkeit vorgesehen sind.

15. System zum Einstellen einer Oberflächenkontur nach einem oder beiden der vorhergehenden Ansprüche 13 und 14, **dadurch gekennzeichnet, daß** der Steuerung ein Datenspeicher für verschiedene Oberflächenkonturen zugeordnet ist und die jeweils ausgewählte Kontur von der Steuerung durch entsprechenden Regeleingriff angesteuert wird und/oder die Steuerung ein Zeitglied aufweist und eine von der Meßvorrichtung aufgenommene Abweichung des Ist-Wertes von dem der Steuerung zugrundegelegten Soll-Wert erst nach Abarbeitung des Zeitgliedes zu einer Ansteuerung von Pumpen und/oder Ventilen führt.

16. System zur Erkennung einer Flächenbelastung, wobei unter der Fläche eine oder mehrere mit einem Medium gefüllte Blase/n vorgesehen ist, die aufgund der Flächenbelastung eine Formveränderung erfährt, welche von einer Meßvorrichtung, insbesondere nach einem oder mehreren der vorhergehenden Ansprüche 1 bis 12 aufgenommen wird und an eine Überwachungseinheit die durch die Formveränderung bedingte Änderung des Abstandswertes und/oder Belastungsinformation ausgibt.

17. Sitz, bestehend zumindest aus einer eine Sitzfläche und einer daran angeordneten Rückenlehne umfassende Sitzoberfläche, mit Mitteln zur Veränderung zumindest eines Teiles der Kontur der dem Körper zugewandten Sitzoberfläche und einer Meßvorrichtung, insbesondere nach einem oder mehreren der Ansprüche 1 bis 12, zur Bestimmung dieser Oberflächenkontur und/oder zur Ermittlung der Belastung des Sitzes und/oder einem System zum Einstellen einer Oberflächenkontur nach einem oder mehreren der vorhergehenden Ansprüche 13 bis 15 und/oder einem System zur Erkennung einer Sitzflächenbelastung nach Anspruch 16.

18. Sitz nach Anspruch 17, **dadurch gekennzeichnet, daß** die Blasen auf oder in dem Sitz beziehungsweise der Rückenlehne angeordnet sind.

19. Sitz nach einem oder mehreren der Ansprüche 17 bis 18, **dadurch gekennzeichnet, daß** nach einem definiertem Einstellen der Sitzkontur die von der Meßvorrichtung gemessenen Werte einer oder mehrer Blasen gespeichert werden und ein reproduzierbares Füllen von Blasen durch die Steuerung aufgrund dieser gespeicherten Werte möglich ist und/oder die Steuerung bzw. die Überwachungseinheit durch Auswerten des von der Meßvorrichtung ausgegebenen Wertes bzw. Information und gegebenenfalls unter Berücksichtigung des in der Blase herrschenden Druckes und gegebenenfalls der Temperatur feststellt, in welcher Weise der Sitz beansprucht wird, indem die Steuerung die verschiedenen Parameter mit in einem Parameterspeicher hinterlegten Parametersätzen vergleicht und den Parametersätzen verschiedene Beanspruchungsprofile zugeordnet sind und/oder das ermittelte Beanspruchungsprofil auch zur (Mit-) Steuerung von anderen Fahrzeugelementen, zum Beispiel des Airbags, eingesetzt wird und/oder die Steuerung noch weitere Parameter des den Sitz aufnehmenden Fahrzeuges, zum Beispiel die Fahrzeuggeschwindigkeit, die Querbeschleunigung, die Traktion und/oder die Bremsleistung auswertet bzw. berücksichtigt.
